# EUROPEAN PATENT SPECIFICATION

(11) **EP 2 029 417 B1**
(45) Date of publication and mention of the grant of the patent: **03.11.2010**
(21) Application number: 07726040.4
(22) Date of filing: 15.06.2007
(51) Int. Cl.: B62J 1/00

(54) **BICYCLE SADDLE**
FAHRRADSATTEL
SELLE DE BICYCLETTE

(30) Priority: 21.06.2006 IT VI20060190
(43) Date of publication of application: 04.03.2009
(73) Proprietor: M.D'A. RIONDATO, Francesco, 36061 Bassano Del Grappa (VI) (IT)
(72) Inventor: RIONDATO, Francesco, 36061 Bassano del Grappa (Vicenza) (IT)
(74) Representative: Bettello, Pietro
(86) International application number: PCT/EP2007/005294
(87) International publication number: WO 2007/147524

(56) References cited:
- WO-A-2005/105558
- WO-A-2006/015731
- JP-A- 2003 226 274

## Description

The present finding concerns a bicycle saddle, according to the general part of claim 1. In particular, the saddle according to the finding constitutes an improvement of the saddle described in Italian patent application no. VI2004A000204, to the same Applicant (corresponding to publication PCT no. WO2006/015731). As far as the state of the art is concerned, we refer to the very same documents quoted in that publication. Nevertheless, summarising the problems for which the finding according to the quoted publications intended to provide a solution, it essentially concerns avoiding vascular compression of the perineal structures that occurs in users of bicycle saddles previously placed on the market. In particular, many medical studies have demonstrated that temporary and in some cases even permanent insensitivity of the penis is caused, of course to a greater extent the more the bicycle is used. The main cause of these effects has been attributed by these studies to the long and narrow point of the saddle. Moreover, it has been possible to establish that the most important factor in safeguarding blood flow to the penis is not the amount of padding in the saddle, but its length, this characteristic making it possible to avoid the compression of the structures of the pelvic floor in the compression of the vein and of the deep artery of the penis, on the pubic arch. It should also be noted that saddles known at that time were able to cause substantial problems for female users as well causing, in particular, their genital organs to be squashed.

The saddle according to the publications quoted above solves the problem outlined above thanks to its special configuration; the main thing of note is the presence of a suitably shaped central channel, which avoids the compression of the vascular structures of the perineum. Thanks to its special configuration the saddle is made so that the user sits on its surface only with the gluteal muscles, the ischiatic tuberosities and the pubic-ischial rami. Moreover, said saddle has a lateral configuration such that, during the pedalling action, there is no rubbing of the gracilis and adductor muscles. Moreover, the aforementioned saddle has a typical eagle's beak-shaped tip, which keeps the external genitals from compression.

Such a saddle is extremely effective for achieving the aforementioned purposes, but it has the drawback due to the existence of its central channel, which is relatively large in size. In practice, the presence of this channel is liable to cause problems for the user, since his/her various organs, above all under low temperature conditions, are exposed to bad weather. Moreover, in the case in which the bicycle is used on a wet road, the user's various organs in contact with the saddle are subjected to substantial cooling, due to the fact that his/her clothes will clearly soak up water. This is particularly unpleasant and uncomfortable in the case of users who perform competitive sport and who are forced to remain on the saddle even for many hours non-stop.

The purpose of the present finding is to make a saddle that has the same advantages for the user offered by the saddle according to the documents quoted above, but that at the same time does not have the aforementioned drawbacks, with reference to the use of the saddle itself in bad weather conditions.

This is obtained, according to the finding, by shaping the saddle according to the characterising part of claim 1.

In practice, according to the finding, the central channel located in the central part of the saddle is closed through a thin wall at its lower part; advantageously, said lower closing surface ends with a small opening to make it easier for various dusts and liquids that could be caught in the cavities defined beneath said closing wall during the use of the saddle to come out.

These and other characteristics of the finding shall now be illustrated and described in detail, with reference to some particular embodiments thereof, given as non-limiting examples, with the help of the attached tables of drawings, where:

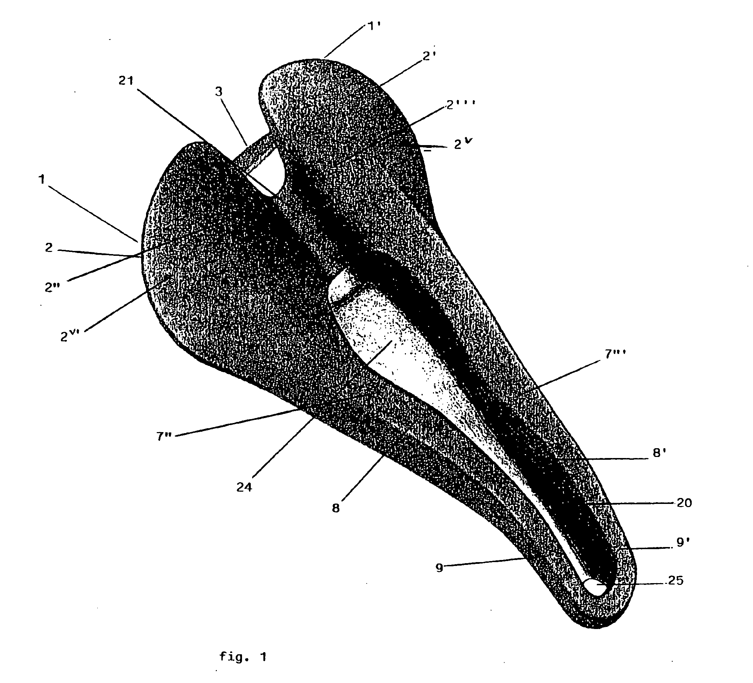

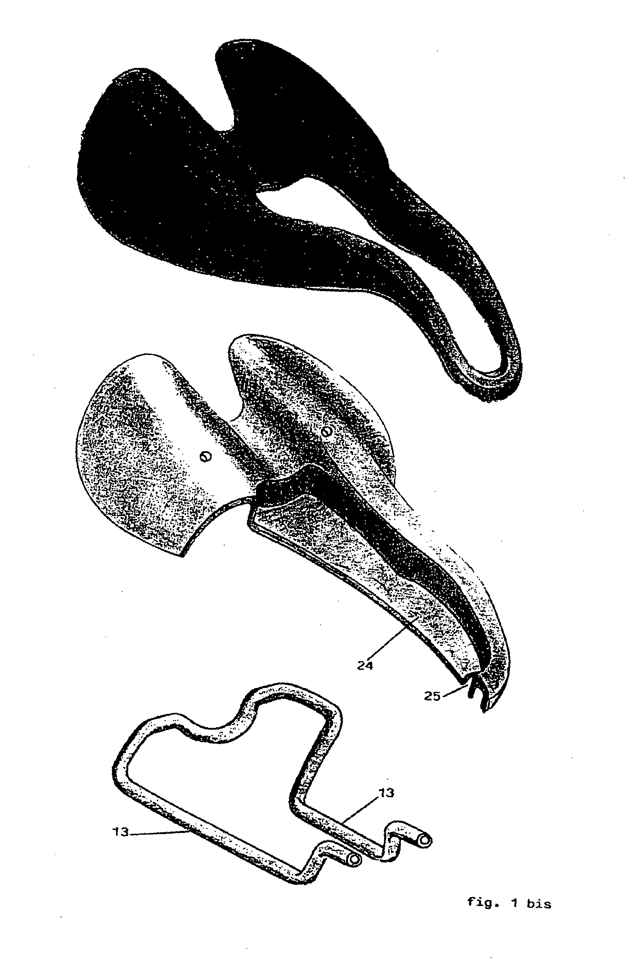

fig. 1 (Table I) illustrates an overall perspective view of the saddle according to the finding;
fig. 1 bis (table II) illustrates an exploded view of the elements that make up the saddle according to the finding
fig. 2 (table III) illustrates a longitudinal-vertical section view of the saddle according to the finding;
fig. 3 (table IV) illustrates a plan view from above of the saddle according to the finding;
fig. 4 (table V) illustrates a plan view from below of the saddle according to the finding;
fig. 5 (table VI) illustrates a view of the two small plates for the attachment of the support fork of the saddle and a perspective view of said fork;
fig. 6 (table VII) illustrates a longitudinal section of the racing saddle according to the finding and the lateral dissection of the coccyx bone;

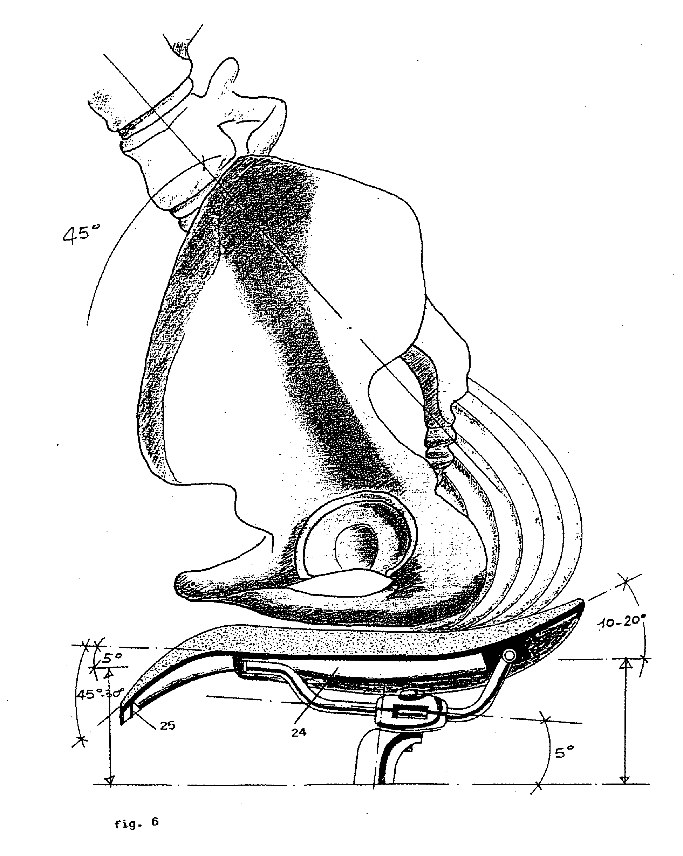

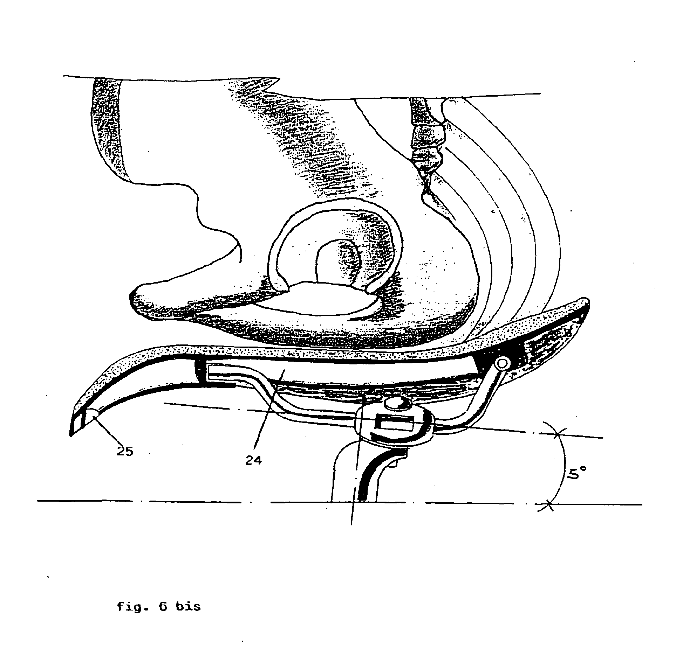

fig. 6 bis (table VIII) illustrates the compression that the ischial-pubic ramus exerts on the padding when the user sits on the saddle;

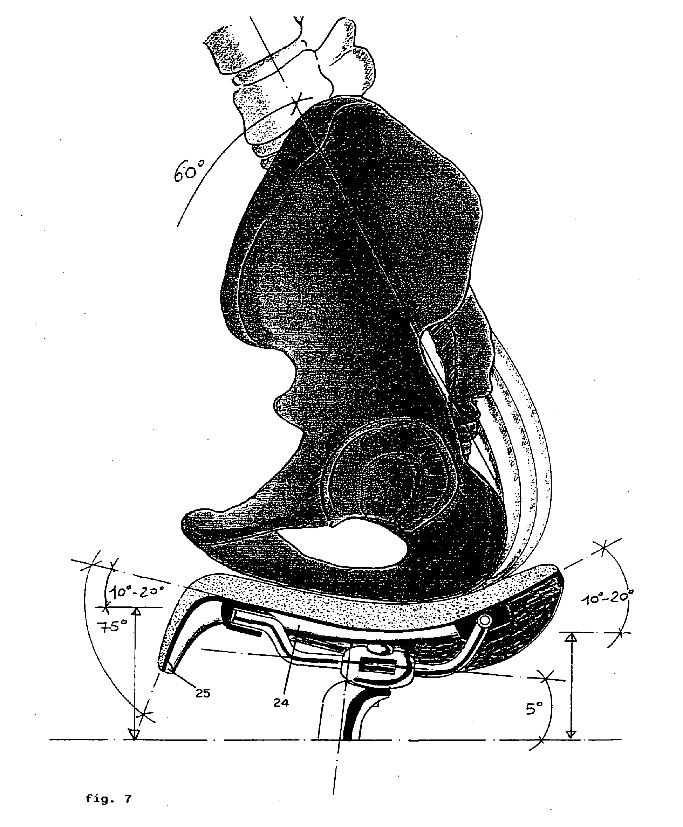

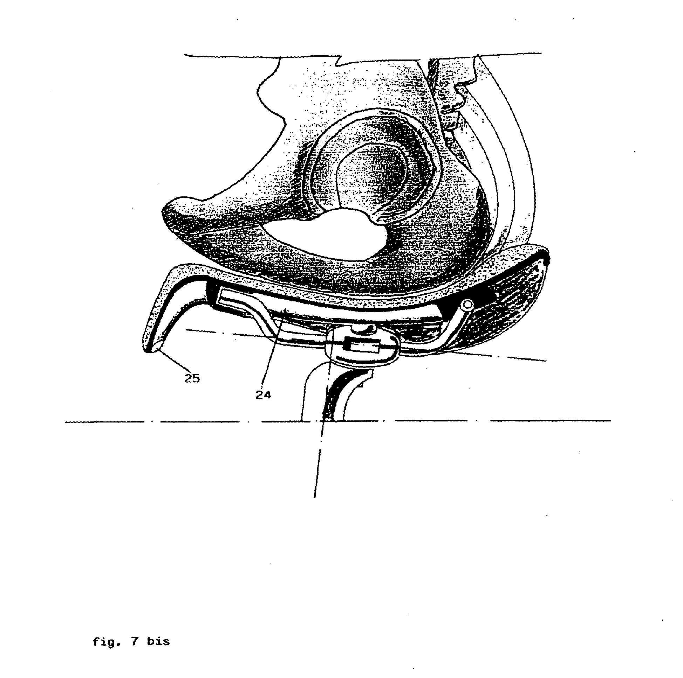

fig. 7 (table IX) illustrates the longitudinal section of the saddle according to the finding of the type for leisure and the lateral dissection of the coccyx bone;
fig. 7 bis (table X) illustrates the compression that the ischiatic tuberosity and the ischial-pubic ramus exert on the padding, when the user sits on top of the saddle;

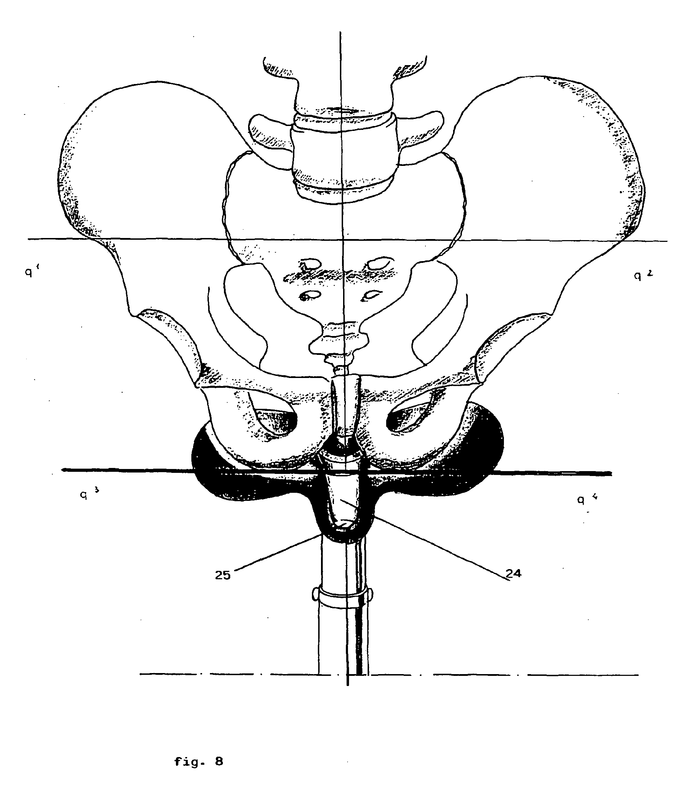

fig. 8 (table XI) illustrates a front view of the saddle according to the finding with the coccyx bone resting on top of it; the space for housing the body of the penis between the pubic arch and the central channel of the saddle according to the finding and the stable position of the four quadrants of the human body are thus highlighted;

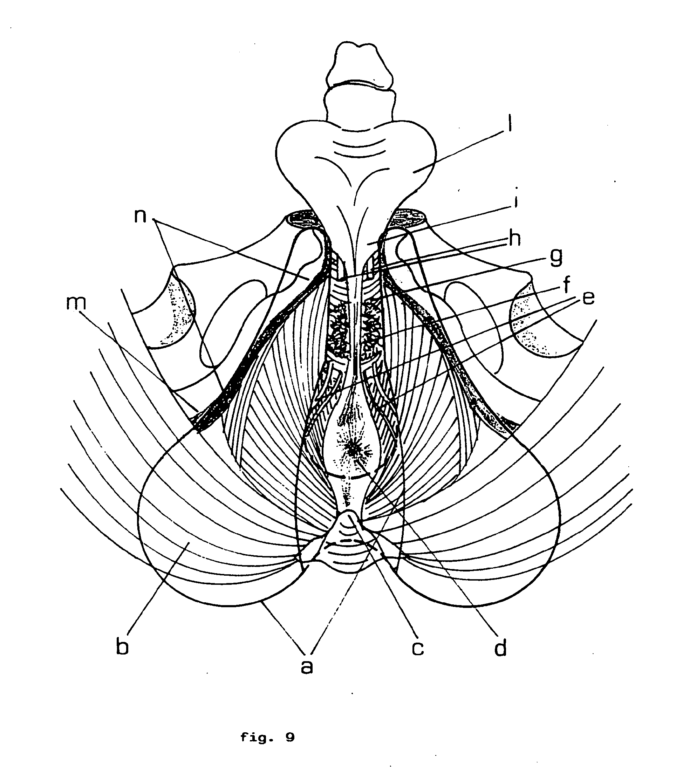

fig. 9 (table XII) illustrates a horizontal dissection of the structures of the pelvic floor, of the ischiatic tuberosities, of the pubic-ischial rami and of the gluteal muscles, housed on the surface of the saddle according to the finding;

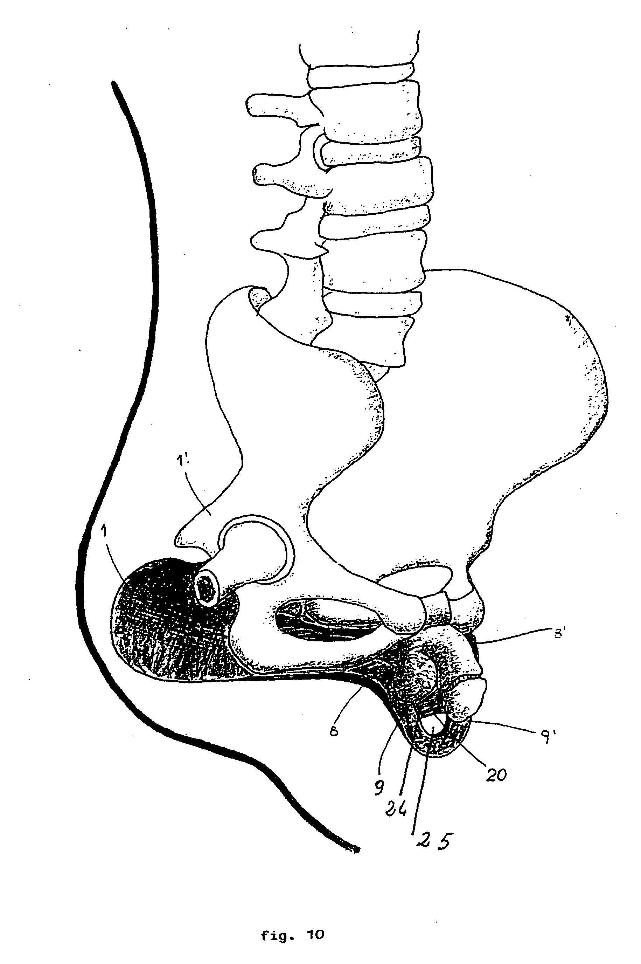

fig. 10 (table XIII) illustrates a perspective view of the coccyx bone positioned on top of the saddle according to the finding, where it is possible to see the free articulation of the hip and the body of the penis and the testicles arranged between the pubic arch and the saddle according to the finding;

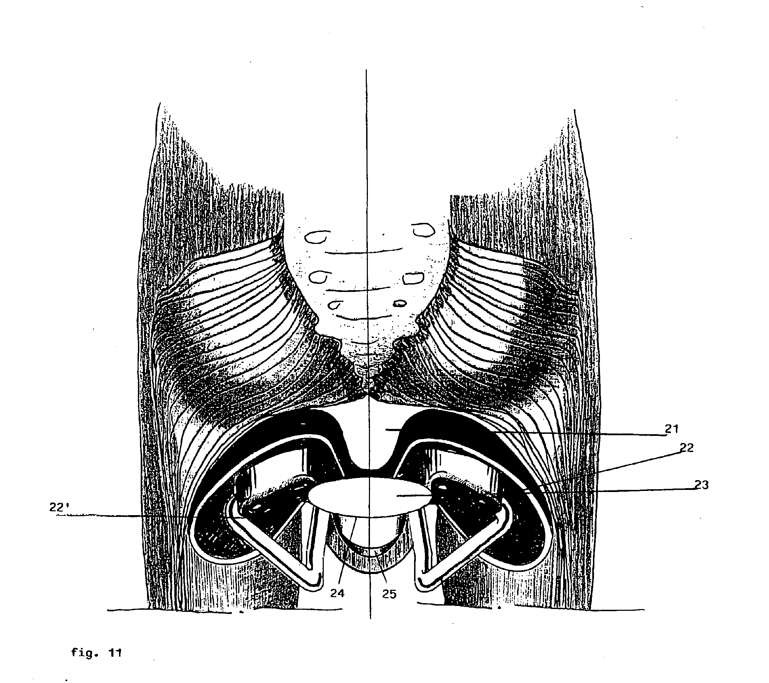

fig. 11 (table XIV) illustrates a rear view of the saddle according to the finding and the dissection of the coccyx and of the gluteal muscles housed on the rear parts of the saddle according to the finding;

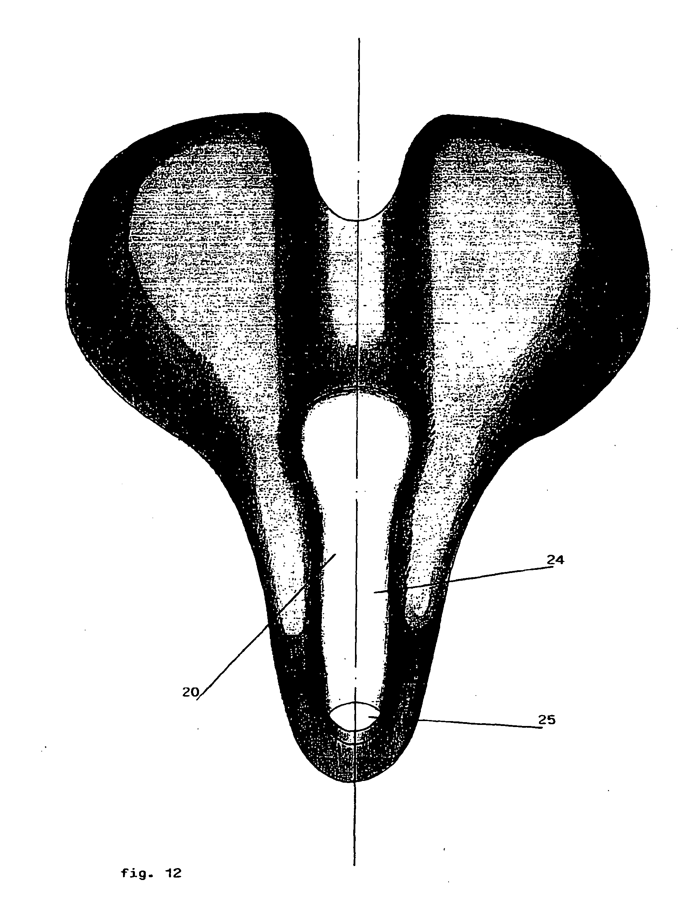

fig. 12 (table XV) illustrates a plan view of a saddle according to the finding of the type for leisure;

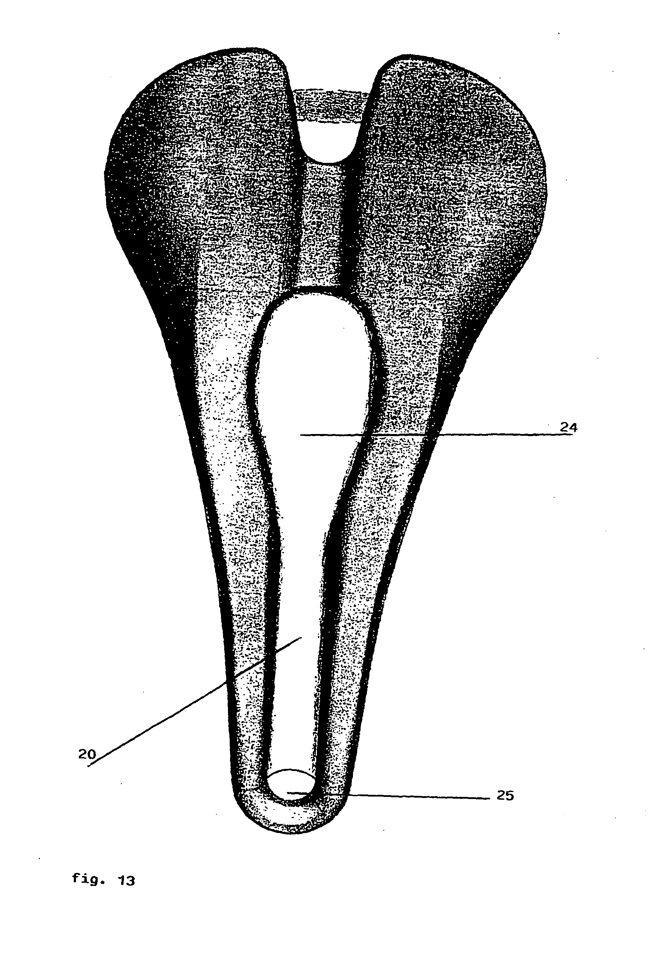

fig. 13 (table XVI) illustrates a plan view of a saddle according to the finding of the type for cycling enthusiasts and for racing;

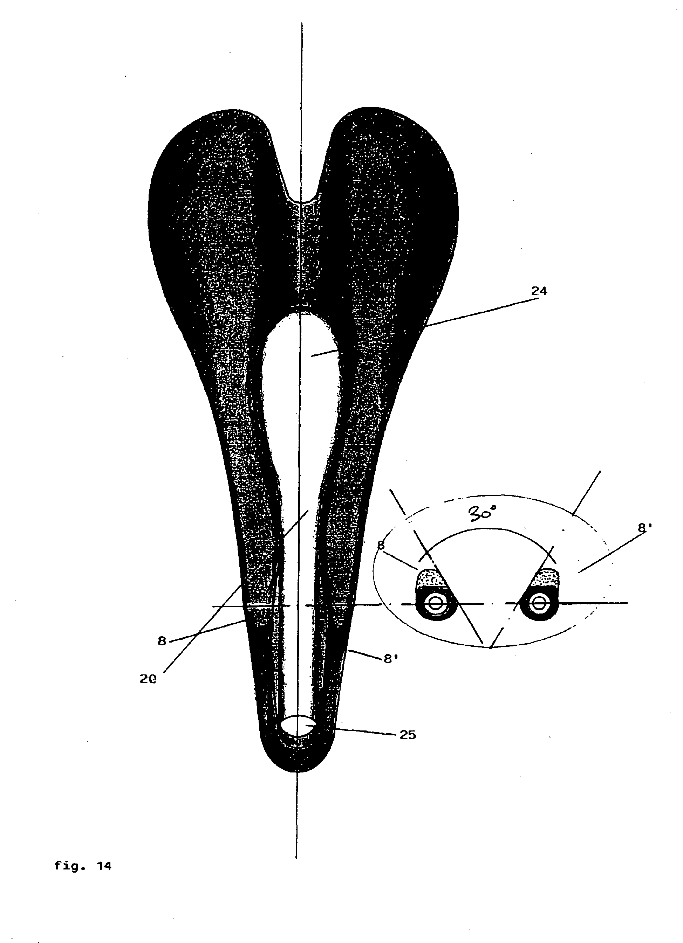

fig. 14 (table XVII) illustrates a plan view of a racing saddle according to the finding and the detail of a further widening of the longitudinal central channel in the front part;

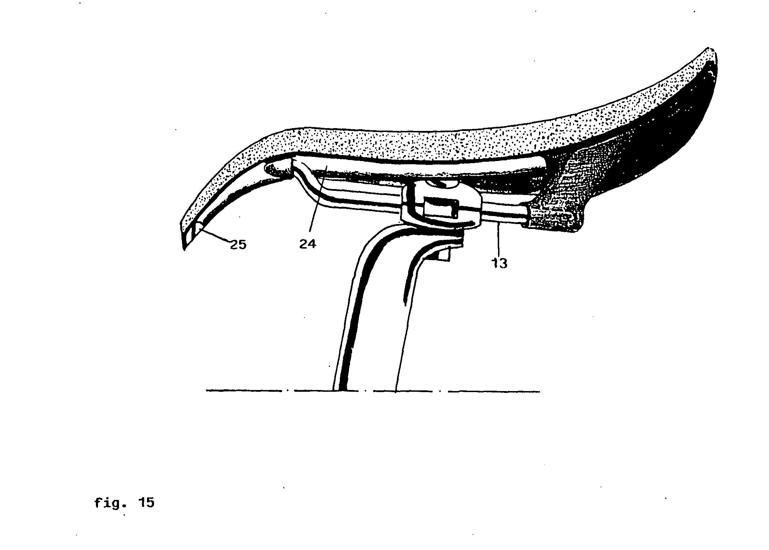

fig. 15 (table XVIII) illustrates a longitudinal section of the body made from carbon or similar and of the support fork, of the saddle according to the finding;

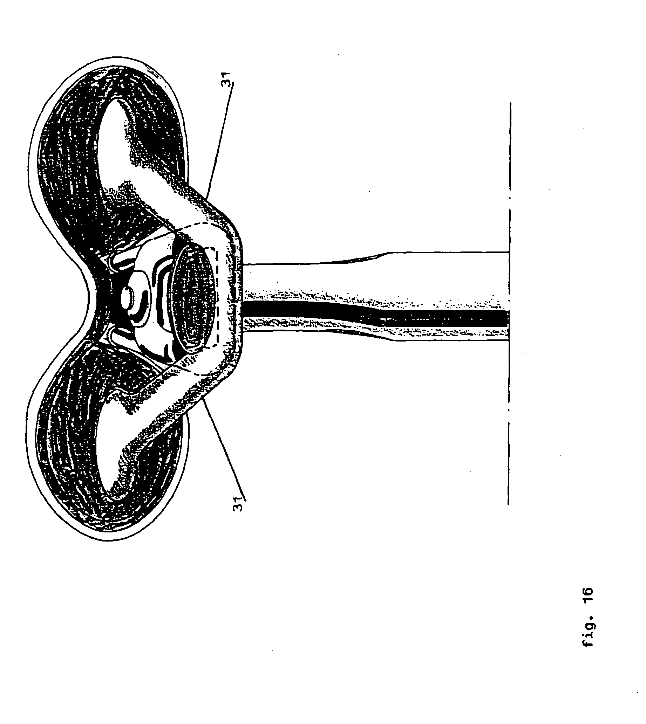

fig. 16 (table XIX) illustrates a rear view of the body made from carbon or similar of the saddle according to the finding;

The saddle according to the finding is designed to be used on a racing bicycle, with non-limiting measurements of length 27 cm and of width rear 13-14 cm and on a leisure bicycle of length 20 cm and rear width about 18-22 cm.

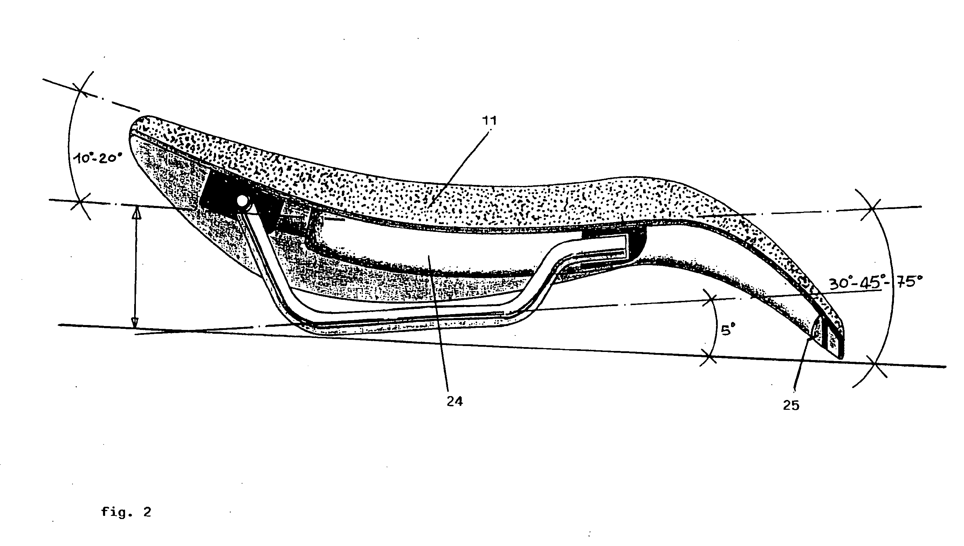

As can be seen in fig. 1, the saddle according to the finding has two identical portions 1, 1', longitudinally symmetrical, with a long central channel 20 at the front part of its middle area; it is closed in the lower part with a wall 24 and has a depth with respect to the surface of the body where the padding rests of about 1 cm, which added to the thickness of the padding of the racing saddle increases to 2 cm (not limiting) and for the leisure saddle to 2.8 cm (not limiting), thus creating a sufficient housing to receive the vascularisation and the structures of the floor of the perineum and genitals, when the user sits on the saddle according to the finding. In the front part, where the tip of the saddle goes down like an eagle's beak at 30°-45°-75°, the underlying wall 24 advantageously ends with a small opening 25 to make it easier for various dusts and liquids, which could build up during its use, to come out from the channel. Each of these identical portions has a rear part 2, 2', which jointly, for the racing bicycle are advantageously of width 13-14 cm and for the leisure bicycle of 18-22 cm. The two parts 2, 2' are joined together by a depression portion 21. As can be seen in particular in fig. 2 their rear portion is inclined upwards between about 10° and 20°. The parts close to the central depression 21 of the parts 2, 2', indicated in the figures with reference numerals 2" and 2"', are substantially flat and globally have a size of about 7 cm, to then go down suddenly with respect to the vertical with an angulation that varies from about 45° to about 60°, ending with the side parts 2'(IV) 2'(V).

It shall be clear in the subsequent anatomical figures that the flat parts 2",2"' are used to support the gluteal muscles and the ischiatic tuberosities and vice-versa just the gluteal muscles rest upon the inclined parts 2(IV) ,2(V), as can be seen in fig. 11.

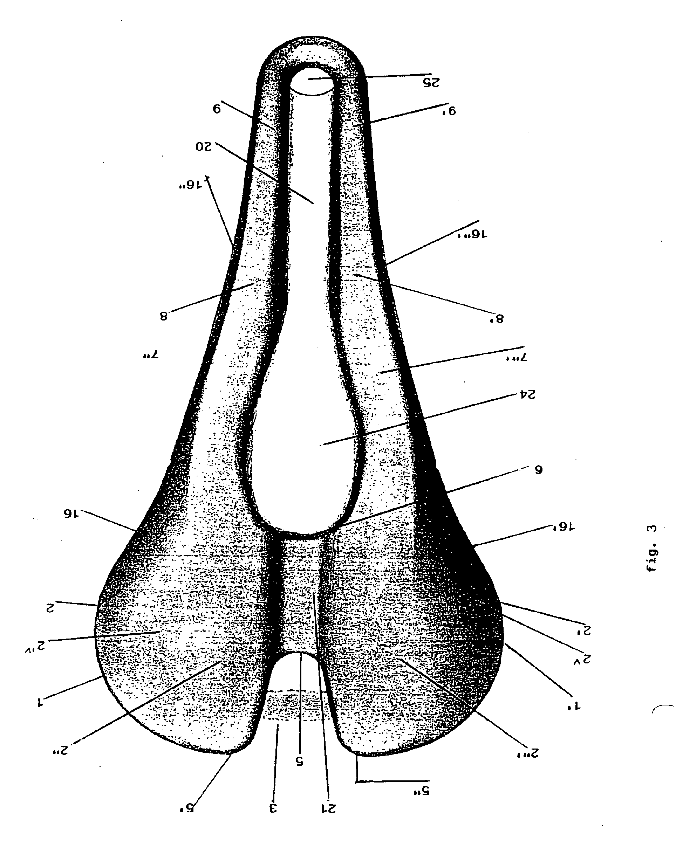

As can be seen in fig. 1, but also in fig. 3, at their intermediate rear area the parts 2,2' are configured like an inlet 3, which is essentially dovetail shaped, the ends of which 5',5" (fig. 3) are about 2.5-3 cm apart (not limiting) and that end with the front end 5 in the shape of a semi-circle. From said end the depression 21, indeed, already seen previously, which acts as a joining element of the two parts 2 ,2', begins. Such a depression has a length that is variable between about 4-6 cm and is about 1.5 cm deep. Its presence is essential to avoid the coccyx touching the surface of the saddle, particularly when riding on substantially uneven road surfaces.

Preventing the coccyx from touching the surface of the saddle means protecting against possible microtraumas that, in the contrary case, would lead to unpleasant pains in the spine, especially for those who use the bicycle for training or racing over prolonged periods.

The rear parts 2", 2"' join at the front portion 7", 7"' through a slight slope. At this slope the saddle has a total width of 7 cm (not limiting).

The front portions 7",7"' are inclined upwards by about 5° (not limiting) for the racing saddle and by about 10°- 20° (not limiting) for the leisure saddle and thus are intended to substantially approach one another until they are 4 - 4.5 cm apart, at the points 8,8'. In these areas the side of the saddle goes perpendicularly laterally downwards, with the corners suitably radiated so as not to create discomfort on the skin of the thigh.

The ischiatic tuberosities and the pubic-ischial rami rest on top of these front parts of the saddle and said ischiatic tuberosities and the pubic-ischial rami find a support surface on which the concentrated load of the human body is uniformly distributed, for their entire length, when the user sits on the saddle according to the finding.

Moreover, the pubic-ischial rami, resting on the front parts 7", 7"', at the points 8 , 8' have the function of supporting a part of the weight of the bust of the human body, when the user puts his/her hands on the handlebars of the bicycle.

Finally, at the front end part of the saddle 8 , 8', where the seat of the pelvis ends, there are the portions 9, 9', inclined downwards like an eagle's beak with an inclination of 30°- 45° (not limiting) for the racing saddle and of 75° (not limiting) for the leisure saddle, as can be clearly seen in fig. 2. At the front end of the saddle the two portions 9, 9' join up substantially in the shape of a semi-circle, with a diameter of about 4-3.5 cm, to keep the portions 1, 1' joined at the front.

The very considerable inclination of the portions 9,9', (see figs. 9 and 10) makes it possible to avoid, respectively, the testicles in the case of a male user and the clitoris in the case of a female user, being squashed on them during use of the saddle, thus conforming to the indications of the Urology tests quoted above.

Not only this, but the compression of the body of the penis, of the vein and of the deep dorsal artery is also avoided, thus maintaining normal blood flow.

The parts 9, 9', which in the racing saddle are inclined downwards by 30°-45° (not limiting), are useful to the competitive user, during the final spring or time trials when he/she leans forward with his/her pelvis, to gain a minimum support for the gluteal muscles thus avoiding the compression on the anus and on the prostate.

Observing fig. 3 it can be seen that the saddle has a particularly tapered and aggressive shape. This tapered shape is able to satisfy in particular the professional user, who does not have to feel any discomfort or pain when pedalling either in training or during a race. In particular, with reference to the central channel 20, it should be noted that at its rear end it is semi-circle shaped with a diameter that varies from about 3 cm to 5 cm. Proceeding to the front the channel 20 narrows up to about 2.5 cm, ending at the front with an area having a configuration, also in this case, that is substantially semicircular.

At the widest rear part of the channel the anus, the prostate (obviously for the male user), worked out in scientific tests to be about 2.5 cm in diameter, as well as the genital arteries, the veins and dorsal arteries can be comfortably housed; the body of the penis and the testicles rest at the parts 9, 9'. In the case of a female user the vagina, as well as not suffering any compression, since the central channel 20 is sufficiently wide and deep, is able to maintain constant aeration, which is important to sustain the complex interaction between microrganisms that constitute the vaginal flora; at the same time the vestibule, the labia minus and majus and the clitoris rest at the points 8, 8' of the saddle. The channel 20 fully satisfies the indications quoted above provided by the Urology studies already carried out; indeed, the saddle according to the finding has been subjected to a scientific Urology test, on 29 healthy young cyclists, with a body weight of between 45-70 kg and between 18 and 30 years old, firstly sitting on the saddle according to the finding for 15 minutes and then on the same saddle pedalling for another 15 minutes, measuring the blood flow to the perineal structures with a Clark electrode positioned on the gland of the penis of the cyclists.

The obtained data compared with the data of the last scientific test by the Urologist Schwarzer demonstrates that the saddle according to the finding is statistically better than the saddle that provided the best results in that study, thus demonstrating the regular blood flow to the perineal vascular structures, when sitting and pedalling on it.

Regarding this, it is important to note that, with the saddle according to the finding, the male user does not encounter any rubbing on the anus and on the entire surface of the skin of the penis, thus avoiding possible foruncolosis or dermatitis. Moreover, the testicles are abundantly aerated, thus keeping the temperature below 37°, optimal for the normal operation of the production of seminal liquid.

It should be noted that the intermediate part of the racing saddle (see fig. 3), the one approximately defined, respectively, by points 16, 16" and 16', 16"', the saddle has a limit width such as to allow the ischiatic tuberosities and the pubic-ischial rami to rest with the inner part.

This provision is important so that the joints of the semitendinosus muscles, of the biceps femoris, of the gracilis muscles and furthermore of the perineal nerves and of the lower buttock nerves, do not undergo any compression, thus maintaining a regular blood flow and consequently the oxygenation of the muscle fibres during pedalling.

Proceeding with fig. 1 bis, (exploded view of the main components of the saddle according to the finding) it is possible to see the padding that shall be mainly covered in leather, the bearing body made from nylon plus a percentage of carbon or other plastic materials and the support fork, made in steel tubing.

In fig. 2, a vertical longitudinal section, we can see the particular ergonomic shape, which characterises the saddle according to the finding.

The overlying padding 11 (fig. 2), with a non-limiting thickness of 1-1.5 cm in the front part and with a non-limiting thickness of 2-5 mm in the rear part, is advantageously made from expanded bicomponent elastomeric polyurethane, or from compact or expanded polyurethane, or from styrol-butylene-styrol, or from expanded vulcanised rubber or other plastic materials suitable for the requirements of the saddle according to the finding; these materials shall be suitably used in the various models that make up the product range of the saddles according to the finding. These materials that make up the padding are able to withstand the load of the human body of the user, when he/she sits on top of the saddle according to the finding, thus avoiding the ischiatic tuberosities and the pubic-ischial rami touching the underlying bearer body.

The underlying bearer body has a non-limiting thickness of about 2-3 mm, thus configured, it has the ergonomic function of housing the gluteal muscles and a part of the ischiatic tuberosities in the rear parts and the pubic-ischial rami in the front parts; thus designed, also with this minimal support surface, the weight of the human body of the user is uniformly distributed over the saddle, without him suffering any bruising or squashing of delicate parts of the floor of the perineum and of the muscle joints. Basically, the saddle according to the finding is a small bicycle seat, which meets the requirements both of the cycling enthusiast and of the professional cyclist.

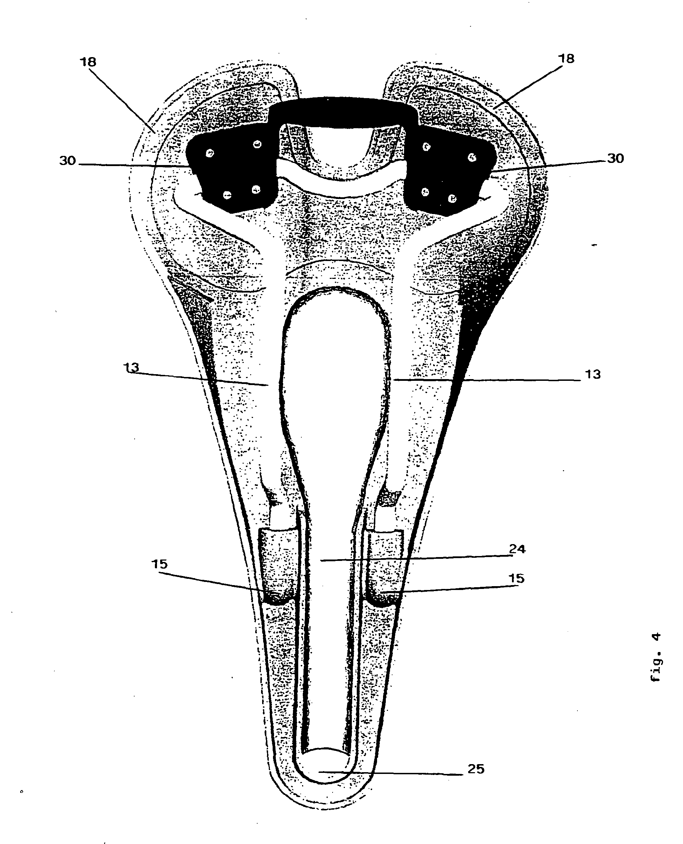

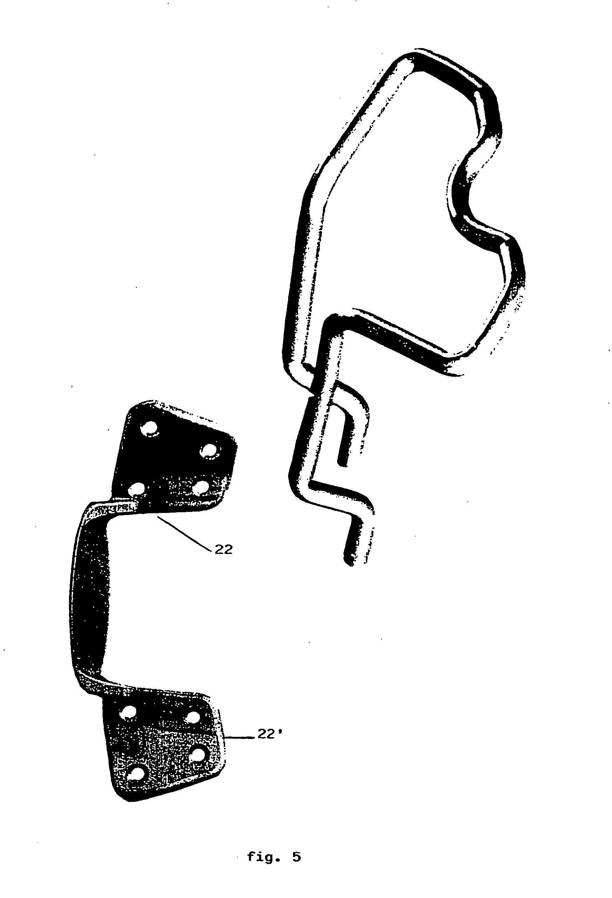

The support fork 13 is fixed to the body on suitable seats, frontally 15 on suitable pockets and at the back 30 on ready-made supports on the body. In fig. 4 the positioning and the locking of the fork in points 30 consists in plan of two prism-shaped superelevations above which two plates 22, 22' shall be fixed in a sandwich, with self-threading screws (fig. 5), already provided with holes for the screws and joined together by a plate 23 (fig. 6); there is also a perimetric band 18 with a width of about 6 mm and a thickness of about 3.5 mm, above which the final part of the leather covering the saddle according to the finding shall be glued and further fixed with staples.

The support fork 13 (fig. 5) is configured in a single tubing element made from stainless steel, aluminium, titanium or other materials that are strong and at the same time light, with the rear part closed, facing upwards for about 4 cm and about 10 cm wide in the upper part and configured following the shape of the underlying surface of the body of the saddle according to the finding.

The saddle this firmly fixed to the fork, which is in turn fixed to the support of the bicycle, always remains stable during the pedalling action of the user, when the body weight discharges with force, in an alternating manner, on the parts 1 , 1' of the saddle according to the finding (see fig. 8 ).

Hereafter with the suitable illustrations, we shall consider the different ergonomic shape of the surface of the body of the racing saddle and of the leisure saddle according to the finding.

Fig. 6 illustrates the section of the racing saddle with the coccyx bone dissected above, arranged in pedalling position at about 45°. In fig. 6 bis it is possible to see the pubic rami of the ischium, which compress the padding of the saddle with the weight of the human body; the front surface of the body faces upwards by only 5° (not limiting) to house the pubic rami of the ischium, which in this position move downwards, whereas the tip of the saddle goes downwards by 30°- 45° (not limiting) to allow the professional user to rest the gluteal muscles during the final sprint or time trial; in the rear part facing upwards by 10°- 20° (not limiting) the gluteal muscles are housed.

Fig. 7 illustrates the section of the leisure saddle with the coccyx bone dissected above, arranged in pedalling position at about 60°. In fig. 7 bis it is possible to see the ischiatic tuberosities and the pubic rami of the ischium, which compress the padding of the saddle with the weight of the human body; the front surface of the saddle faces upwards by 10°-20° (not limiting), to house the pubic rami of the ischium that, in this leisure pedalling position, face upwards, whereas the tip faces downwards by 75° (not limiting); in the rear part, facing upwards by 10°-20° (not limiting), the gluteal muscles are housed.

Fig. 8 illustrates a front view of the saddle according to the finding and a dissection of the coccyx bone housed above its surface; four quadrants - q 1 left upper - q 2 right upper - q 3 left lower - q 4 right lower always remain stably in axis with the saddle during any pedalling action that can also be intense or even excessive, also thanks to the support fork described above, allowing all of the muscles of the lower limbs and other vital functions to interact uniformly.

Fig. 9 highlights, with the dissection of the floor of the structures of the perineum, of the ischiatic tuberosities, of the pubic rami of the ischium, of the gluteal muscles and of the genitals, their positioning on the surface of the saddle; the channel 20 houses, without undergoing any compression, in the male the coccyx, the anus, the pudendal arteries, the prostate, the body of the penis, the artery and deep dorsal vein of the penis, the skin of the penis, and the testicles, whereas in the female it houses the vagina, the labia minus and majus and the clitoris.

In this way the blood flow to the penis is total during the pedalling action of the user.

Here below the legend of fig. 9 is shown
- a: perimeter of the saddle according to the finding
- b: gluteal muscles
- c: coccyx
- d: anus
- e: pudendal arteries
- f: prostate body
- g: body of the penis
- h: artery and deep dorsal vein of the penis
- i: skin
- l: testicles
- m: ischiatic tuberosities
- n: pubic rami of the ischium

Fig. 10 shows the perspective view of the dissection of the coccyx bone positioned above the surface of the saddle according to the finding, highlighting how the space occupied by the body of the penis and by the testicles is free from hindrances in points 8, 8' and in parts 9, 9' that go down like an eagle's beak at 30°-45° (not limiting) for the racing saddle and at 75° (not limiting) for the leisure saddle.

Fig. 11 illustrates the rear view of the saddle according to the finding with the dissection of the gluteal muscles of the coccyx and of the sacrum positioned above the surface of the saddle according to the finding; it should be noted that the coccyx is quite detached from the surface of the saddle due to the presence of the depression 21 and that the gluteal muscles rest ergonomically on the lateral surfaces of the saddle, which are inclined downwards by about 45°-60°. The plate 23, which connects the two attachment plates 22-22' of the fork, shall be used to display the brand name of the firm that commercialises the saddle according to the finding.

Fig. 12 illustrates the plan of the leisure saddle according to the finding, which is 20-22cm in length (not limiting), with the rear parts 18-20 cm wide (not limiting), and the central channel 20 and that in the rear part is about 4-5 cm wide and in the front is about 2.5-3 cm wide, with the underlying wall 24 and the opening 25.

Fig. 13 illustrates the plan of the saddle according to the finding for cycling enthusiasts with the rear parts 14 cm wide (not limiting), to end in the front parts with 3.5 - 4.5 cm (not limiting); the middle channel 20 (fig. 1) and the underlying wall 24 with the opening 25, in the rear part, is about 3.5 cm wide and in the front part about 2.5 cm wide and its length is 27 cm for men and 25 cm for women.

Fig. 14 illustrates the plan of the racing saddle according to the finding that, in the rear part, is 13 cm wide (not limiting) and 27 cm long (not limiting); then the section of the constructive detail in the position of points 8 and 8' is illustrated (fig. 1), where it is possible to see that in these points the inner side surfaces open from the bottom towards the top at 30°, so that in this position the central channel 20 (fig.1) in the upper part widens further up to about 3 cm.

This provision is important for the professional cyclist, who during training and competitive races almost always keeps his/her pelvis facing downwards and with the points 8, 8' thus configured (fig. 1) the saddle allows the body of the penis to have a satisfactory ergonomic housing, thus avoiding the compression of the artery and of the deep dorsal vein thereof.

In order to meet the substantial and increasing demand for racing bicycle saddles that are as light as possible, fig. 15 illustrates the longitudinal section of the body made only from carbon material.

In order to make the saddle even lighter the rear part that projects upwards of the support fork 13 with which the saddle according to the finding is equipped has been eliminated, replacing it with two elements 31, forming an integral part of the body in object (see fig. 16), which go down until they rest on the rear part of the fork, which in this point is in closed form, to then be fixed in a sandwich in the underlying part, with a suitable plate held by two self-threading screws made from ultra light metal.

## Claims

1. Bicycle saddle comprising a body, a padding (11) and two identical portions (1, 1'), longitudinally symmetrical, with a long central channel (20) at the front part of its middle area, wherein said two identical portions (1,1') have the following component parts :
two rear parts (2, 2'), which are joined together by a depression (21) ; the rear portion of said rear parts (2,2') being inclined upwards, the parts (2", 2"') of the rear parts (2,2') closest to the central depression (21) being substantially flat , to then go down at the side (2 IV, 2V) with respect to the vertical by about 45°-60°, at their intermediate rear area, the rear parts (2, 2') being configured like an inlet (3), , said inlet (3) being shaped substantially starting from the rear part of the depression (21), said depression (21) acting as an element joining the two rear parts (2, 2') and having a length of about 4 to 6 cm and being about 1.5 cm deep;
two front portions (7",7"') coming together at the rear parts (2", 2"') through a slight slope, at which the saddle narrows, the front portions (7", 7"') being inclined upwards and being intended to move substantially towards one another (8,8') until they are about 3.5 to 4 cm apart, with it being foreseen that in these areas (8,8') the saddle goes down at the side perpendicularly downwards; two front end portions (9, 9') being inclined downwards like an eagle's beak
; at the front ends of the saddle said two front end portions joining up substantially in the shape of a semi-circle with a diameter of about 3,5 to 4 cm; with it also being foreseen that the central channel (20), which starts from the end farthest inside the depression (21), has a wider area at its inner part, in the shape of a semi-circle with a diameter of about 4 to 5 cm for a leisure saddle, of about 3.5 cm for a serious cyclist's saddle and of about 3 cm for a racing saddle and a narrower part of about 2.5 cm, proceeding towards the points (8 , 8') up to the front end of the tip of the saddle; said saddle being **characterised in that** the central channel (20) is closed at the bottom by a thin wall (24) the channel (20) has a depth, with respect to the surface of the body where the padding of the saddle rests, of about 1 centimetre.

2. Saddle according to claim 1, **characterised in that** the wall (24) for closing the channel (20) at the bottom has a small opening (25) to make it easier for various dusts and liquids to come out from the aforementioned channel.

3. Saddle according to claim 1, **characterised in that** it comprises a soft upper padding, fixed to a rigid lower body and to a support fork fixed to the body; the padding, at the rear portions (2, 2'), has a thickness , said thickness gradually increasing at the front portions (7" , 7"'), said thickness from the points (8, 8') gradually decreasing until, at the front portions (9, 9'), it reaches a thickness of about 3 mm.

4. Saddle according to claim 3, **characterised in that** the padding of the saddle consists of soft compact or expanded polyurethane, or else expanded bicomponent elastomer polyurethane, or else styrol -butylene -styrol, or else expanded vulcanised rubber, these being materials that support the weight of the ischiatic tuberosities and of the pubic-ischial rami so that they do not touch the surface of the body below, when the user sits on the saddle according to the finding;

5. Saddle according to claims 1 or 2, **characterised in that** it has a body, on top of which the padding is fixed, consisting of nylon plastic material plus carbon or carbon or else other plastic materials suitable for this type of body, which has in the surface below, on the middle of the rear parts, two prism-shaped projections with the seat in which the support fork (13) rests arranged centrally; two small plates (22, 22') of the same material are then fixed above the two projections in a sandwich, with suitable self-threading screws, to keep the fork fixed to the body; whereas a ridge (18) runs along the outer perimeter that is about 6 mm wide and in total about 3.5 mm thick, above which the leather for coating the saddle shall be glued and stapled, with it also being foreseen that the shape of the body is designed to follow the anatomical shape of the gluteal muscles, of the ischiatic tuberosities and of the pubic-ischial rami, altogether being able to be evenly distributed on top of the surface of the saddle, distributing the weight of the human body uniformly on the saddle, thus avoiding any crushing, even after many hours of training or of competitive racing; the body also laterally follows the geometry of the leg muscles, thus avoiding the rubbing of the gracilis and adductor muscles that could cause troublesome disturbances to the lower limbs.

6. Saddle according to one or more of the previous claims, **characterised in that** the central channel (20) allows the vascular blood flow to the structures of the perineum to be safeguarded; **in that** the body, and consequently also the padding of the saddle, are firmly fixed to the particular fork (13 ), so as to thus make the ischiatic tuberosities and the pubic-ischial rami rest stably.

7. Saddle according to one or more of the previous claims, **characterised in that** the parts (9 , 9') go downwards like an eagle's beak joining together in the shape of a semi-circle to keep the portions (1,1') of the saddle joined together at the front, the seat of the surface of the saddle terminating in points (8, 8') of the parts (7",7"'), so that the testicles, in the male user, and the clitoris, in the female user, do not suffer any squashing.

8. Saddle according to one or more of the previous claims, **characterised in that** the pubic rami of the ischium, being housed above the parts (7", 7"'), at the parts (8, 8'), support a great deal of the weight of the person's upper body, when the user rests the hands on the handlebars, the depression (21) allowing the coccyx not to touch the surface of the saddle, in particular when the user rides along rough road surfaces.

9. Saddle according to one or more of the previous claims, of the type for racing in particular for professionals who train and participate in competitive races, **characterised in that** in points (8, 8'), the inner part opens up, from the bottom towards the top by 30°, thus increasing the width of the channel (20) in these points by about 3 cm and thus the professional user, during training and competitive races, almost always keeps the torso facing downwards taking the pubic arch towards the surface of the saddle and consequently the body of the penis at the point (8), with this particular provision, the user being able to find a larger ergonomic housing, thus avoiding the compression of the artery and of the deep dorsal vein thereof.

10. Saddle according to one or more of the previous claims, of the type for racing, **characterised in that** it has a body with the front parts (7" ,7") inclined upwards, so that the pubic rami of the ischium go down, thanks to the position of the torso of the human body, when the professional user sits on the saddle.

11. Saddle according to one or more of the previous claims, of the type for leisure, **characterised in that** it has the body with the front parts (7", 7"'), inclined upwards, so that the pubic rami of the ischium go upwards, thanks to the upright position of the torso of the user's body, when they sit on the saddle.

## Patentansprüche

1. Fahrradsattel mit einem Korpus, einer Polsterung (11) und zwei identischen Teilen (1, 1'), die in Längsrichtung symmetrisch sind, mit einem langen, zentralen Kanal (20) an der Vorderseite des mittleren Bereichs, wobei die beiden identischen Teile (1, 1') die folgenden Komponenten aufweisen:
zwei rückwärtige Teile (2, 2'), die an einer Vertiefung (21) zusammentreffen, wobei der rückwärtige Abschnitt der rückwärtigen Teile (2, 2') nach oben geneigt ist, die der mittigen Vertiefung (21) am nächsten liegenden Teile (2", 2"') der rückwärtigen Teile (2, 2') im Wesentlichen flach sind, um dann in ihrem rückwärtigen Zwischenbereich an der Seite (2 IV, 2V) relativ zur Vertikalen um etwa 45° bis 60° abzufallen, wobei die rückwärtigen Teile (2, 2') wie ein Einlass (3) konfiguriert sind, wobei der Einlass (3) im Wesentlichen beginnend am rückwärtigen Teil der Vertiefung (21) ausgeformt ist,
wobei die Vertiefung (21) als ein die beiden rückwärtigen Teile (2, 2') verbindendes Element wirkt und eine Länge von etwa 4 bis 6 cm und eine Tiefe von etwa 1,5 cm aufweist;
zwei vordere Teile (7", 7"'), die an den rückwärtigen Teilen (2, 2') über eine leichte Böschung zusammentreffen, an welcher sich der Sattel verschmälert, wobei die vorderen Abschnitte (7", 7"') nach oben geneigt und dazu bestimmt sind, im Wesentliche aufeinander zu zu laufen (8, 8'), bis sie etwa 3,5 bis 4 cm auseinander sind, wobei vorgesehen ist, dass in diesen Abschnitten (8, 8') der Sattel an den Seiten senkrecht nach unten abfällt;
zwei vordere Endabschnitte (9, 9'), die wie der Schnabel eines Adlers nach unten geneigt sind, wobei an den Vorderseiten des Sattels die beiden vorderen Endabschnitte im Wesentlichen in Form eines Halbkreises mit einem Durchmesser von 3,5 bis 4 cm zusammenlaufen, wobei weiterhin vorgesehen ist, dass der zentrale Kanal (20), der an dem am weitesten entfernten Ende innerhalb der Vertiefung (21) beginnt, als Innenteil einen breiteren Bereich in Form eines Halbkreises mit einem Durchmesser von 4 bis 5 cm für einen Freizeitsattel, von etwa 3,5 cm für einen Radsportsattel und von etwa 3 cm für einen Rennsattel aufweist, sowie einen schmaleren Teil von etwa 2,5 cm, der in Richtung zu den Punkten (8, 8') bis zum vorderen Ende der Sattelspitze hin verläuft;
wobei der Sattel **dadurch gekennzeichnet ist, dass** der zentrale Kanal (20) unten durch eine dünne Wand (24) verschlossen ist,
wobei der Kanal (20) in Bezug auf den Korpus, auf dem die Polsterung des Sattels aufliegt, eine Tiefe von etwa 1 cm aufweist.

2. Sattel nach Anspruch 1, **dadurch gekennzeichnet, dass** die den Kanal (20) unten verschließende Wand (24) eine kleine Öffnung (25) aufweist, die das Austreten von verschiedenen Stauben und Flüssigkeiten aus dem vorbezeichneten Kanal erleichtern.

3. Sattel nach Anspruch 1, **dadurch gekennzeichnet, dass** er eine weiche obere Polsterung umfasst, die an einem starren unteren Korpus und einer an dem Korpus befestigten Haltegabel befestigt ist, wobei die Polsterung an den rückwärtigen Abschnitten (2, 2') eine Dicke aufweist, die an den Vorderabschnitten (7, 7') allmählich zunimmt und von den Punkten (8, 8') allmählich abnimmt, bis sie
an den Vorderabschnitten (9, 9') eine Dicke von etwa 3 mm erreicht.

4. Sattel nach Anspruch 3, **dadurch gekennzeichnet, dass** die Polsterung des Sattels aus weichen kompaktem Polyuretan oder Polyuretanschaum oder aus einem Zweikomponenten-Elastomerpolyuretanschaum oder Styrol-Butylen-Styrol oder vulkanisiertem Schaumgummi besteht, wobei dieses Materialien sind, die das Gewicht der Ischiastuberosität und der Pubis-Ischias-Rami tragen, so dass diese nicht die Oberfläche des Korpus darunter berühren, wenn der Benutzer auf dem erfindungsgemäßen Sattel sitzt.

5. Sattel nach Anspruch 1 oder 2, **dadurch gekennzeichnet, dass** er einen Korpus aufweist, auf welchen die Polsterung angebracht ist, bestehend aus Nylonkunststoff plus Karbon oder Karbon oder sonstigen für einen derartigen Korpus geeigneten Kunststoffen, welcher in der Oberfläche darunter auf der Mitte der rückwärtigen Teile zwei prismenförmige Vorsprünge mit der Aufnahme aufweist, in welche die zentral angeordnete Haltegabel (13) eingesetzt ist, sodann werden zwei kleine Platten (22, 22') desselben Materials mittels geeigneter selbstformender Schrauben sandwichartig über den beiden Vorsprüngen befestigt, um die Gabel am Korpus fixiert zu halten, wobei ein Grat (18) den äußeren Perimeter entlang verläuft, der etwa 6 mm breit und insgesamt etwa 3,5 mm dick ist, über dem das Leder zur Verkleidung des Sattels aufgeklebt und - geheftet wird, wobei auch vorgesehen ist, dass der Form des Korpus so ausgebildet ist, dass sie der anatomischen Form des Gesäßmuskels, der Ischiastuberosität und der Pubis-Ischias-Rami entspricht, die zusammengenommen gleichmäßig oben auf der Oberfläche des Sattels verteilt werden können, wodurch das Gewicht des menschlichen Körpers gleichmäßig auf dem Satten verteilt wird, wodurch selbst nach vielen Stunden des Trainings oder des Wettkampfes jegliche Quetschungen vermieden werden, der Korpus entspricht außerdem lateral der Geometrie der Beinmuskeln, wodurch Reibung der Gracilis- und Adduktorenmuskeln vermieden wird, welche Beschwerden der unteren Extremitäten verursachen könnte.

6. Sattel nach einem oder mehreren der vorstehenden Anspruche, **dadurch gekennzeichnet, dass** der zentrale Kanal (20) die Sicherstellung des vaskulären Blutflusses zu den Strukturen des Perineums ermöglicht, indem der Korpus und damit auch die Polsterung des Sattels fest mit der Partikulargabel (13) verbunden sind, so dass dielschiasiubemsität und der Pubis-Ischias-Rami stabil gelagert sind.

7. Sattel nach einem oder mehreren der vorstehenden Ansprüche, **dadurch gekennzeichnet, dass** die Teile (9, 9') wie der Schnabel eines Adlers nach unten verlaufen und in Form eines Halbkreises zusammenlaufen, um die Abschnitte (1, 1') des Sattels an der Vorderseite zusammen zu halten, wobei der Sitz der Oberfläche des Sattels in Punkten (8, 8') der Teile (7", 7"') endet, so dass die Hoden bei männlichen Benutzer und die Klitoris beim weiblichen Benutzer keine Quetschung erleiden.

8. Sattel nach einem oder mehreren der vorstehenden Ansprüche, **dadurch gekennzeichet, dass** die Pubis-Rami des Ischias, die oberhalb der Teile (7", 7"') liegen, an den Teilen (8, 8') ein Großteil des Gewichts der Oberkörpers der Person tragen, wenn der Benutzer die Hände auf die Handgriffe ablegt, wobei die Vertiefung (21) ermöglicht, dass das Steißbein nicht die Oberfläche des Sattels berührt, insbesondere, wenn der Benutzer eine raue Straßenoberfläche befährt.

9. Sattel nach einem oder mehreren der vorstehenden Ansprüche, und zwar des Typs für Rennen, insbesondere für professionelle Rennfahrer, die trainieren und an Radsportwettkampfen teilnehmen, **dadurch gekennzeichnet, dass** sich bei den Punkten (8, 8') das innere Teil von unten nach oben um etwa 30° öffnet, wodurch die Breite des Kanals (20) an diesen Punkten um etwa 3 cm erweitert wird, wodurch der professionelle Benutzer während des Trainings und Radrennen fast immer den Torso nach unten gerichtet hält, wodurch der Schambogen zur Oberfläche des Sattels geführt wird und damit der Peniskörper zum Punkt (8), bei dieser Ausführungsform, wobei der Benutzer eine größere ergonomische Aufnahme finden kann, wodurch die Kompression der Arterie und der tiefen dorsalen Vene desselben vermieden wird.

10. Sattel nach einem oder mehreren der vorstehenden Ansprüche, und zwar des Typs für Rennen, **dadurch gekennzeichnet, dass** er einen Korpus aufweist, bei dem die Vorderteile (7", 7"') aufwärts geneigt sind, derart, dass die Pubis-Rami des Ischias aufgrund der Position des Torsos des menschlichen Körpers nach unten gehen, wenn der professionelle Benutzer auf dem Sattel sitzt.

11. Sattel nach einem oder mehreren der vorstehenden Ansprüche, und zwar des Typs für Freizeitsport, **dadurch gekennzeichnet, dass** er einen Korpus aufweist, bei dem die Vorderteile (7", 7"') aufwärts geneigt sind, derart, dass die Pubis-Rami des Ischias aufgrund der aufrechten Position des Torsos des Benutzers nach oben gehen, wenn er auf dem Sattel sitzt.

## Revendications

1. Selle de bicyclette comprenant un corps, un rembourrage et deux parties identiques (1, 1'), longitudinalement symétriques, avec un long canal central (20) sur la partie avant de sa zone centrale, dans laquelle lesdites deux parties identiques (1, 1') ont les parties constituantes suivantes :
deux parties arrière (2, 2'), qui sont réunies ensemble par une partie renfoncée (21); la partie arrière desdites parties arrière (2, 2') étant inclinée vers le haut, les parties (2", 2"') des parties arrière (2, 2') les plus proches de la partie renfoncée centrale (21) étant sensiblement plates pour ensuite descendre sur le côté (2 IV, 2 V) par rapport à la verticale d'un angle d'environ 45 à 60 °, dans leur zone arrière intermédiaire, les parties arrière (2, 2') étant configurées comme une entrée (3), ladite entrée (3) étant formée sensiblement depuis la partie arrière de la partie renfoncée (11), ladite partie renfoncée (21) agissant comme un élément réunissant les deux parties arrière (2, 2') et ayant une longueur d'environ 4 à 6 cm et une profondeur d'environ 1,5 cm ;
deux parties avant (7", 7"') réunies dans les parties arrière (2", 2"') par une légère inclinaison, où ladite selle se rétrécit, les parties avant (7", 7"') étant inclinées vers le haut et étant destinées à se déplacer sensiblement l'une vers l'autre (8, 8') jusqu'à ce qu'elles soient distantes d'environ 3, 5 à 4 cm, en prévoyant que, dans ces zones (8, 8'), la selle descende sur le côté perpendiculairement vers le bas;
deux parties d'extrémité avant (9, 9") inclinées vers le bas comme un bec d'aigle ; aux extrémités avant de la selle, lesdites deux parties d'extrémité avant se réunissant sensiblement sous la forme d'un demi-cercle ayant un diamètre d'environ 3,5 à 4 cm, en prévoyant également que le canal central (20), qui part de l'extrémité la plus éloignée à l'intérieur de la partie renfoncée (21), ait une zone plus large dans sa partie intérieure, sous la forme d'un demi-cercle d'un diamètre d'environ 4 à 5 cm pour une selle de loisir, d'environ 3,5 cm pour une selle de cycliste amateur et d'environ 3 cm pour une selle de course, et une partie plus étroite d'environ 2,5 cm, en parant vers les points (8, 8') jusqu'à l'extrémité avant de la pointe de la selle ;
ladite selle étant **caractérisée en ce que** le canal central (20) est fermé à sa partie inférieure par une paroi mince (24), le canal (20) a une profondeur, par rapport à la surface du corps ou le rembourrage de la selle repose, d'environ 1 cm.

2. Selle selon la revendication 1, **caractérisée en ce que** à paroi (24) pour la fermeture du canal (20) à la partie inférieure a une petite ouverture (25) facilitant l'évacuation de diverses poussières et drivers liquides du canal précité.

3. Selle selon la revendication 1, **caractérisée en ce qu'**elle comprend un rembourrage supérieur mou, fixé à un corps inférieur rigide et à une fourche de support fixée au corps ; le rembourrage, au niveau des parties arrière (2, 2'), a une certaine épaisseur, ladite épaisseur augmentant graduellement dans les parties avant (7"', 7"'), ladite épaisseur à partir des points (8, 8') augmentant graduellement jusqu'à ce que, dans les parties avant (9, 9'), elle atteigne une épaisseur d'environ 3 mm.

4. Selle selon la revendication 3, **caractérisée en ce que** le rembourrage de à selle se compose de polyuréthane compact ou expansé mou, ou d'un antre polyuréthane élastomère à deux composants expansé, ou de styrène-butylène-styrène ou d'un autre caoutchouc vulcanise expansé, matériaux qui supportent le poids des tubérosités ischiatiques et des branches ischio-pubiennes de manière à ne pas toucher la surface du corps en dessous, lorsque l'utilisateur s'assoit sur la selle selon l'invention.

5. Selle selon la revendication 1 ou 2, **caractérisée en ce qu'**elle a un corps, au sommet duquel le rembourrage est fixé, se composant de matériau plastique de Nylon plus du carbone ou du carbone ou encore d'autres matériaux plastiques convenant à ce type de corps, qui présente dans la surface en dessous, sur la partie centrale des parties arrière, deux saillies en forme de prisme, le siège sur lequel la fourche de support (13) repose étant agencé centralement ; deux petites plaques (23,22') du même matériau sont ensuite fixées au-dessus des deux saillies en sandwich des vis anto-taraudantes appropriées pour maintenir la fourche fixée au corps; tandis qu'une nervure (18) court le long du périmètre extérieur, qui a une largeur d'environ 6 mm et ,au total, une épaisseur d'environ 3,5 mm, au-dessus de laquelle nervure le cuir servant au recouvrement de la selle sera collé et agrafé, en prévoyant également que la forme du corps soit conçue pour suivre la forme anatomique des muscles fessiers, des tubérosités ischiatiques et des branches ischio-pubiennes, le tout étant à même de se répartir uniformément sur la surface de la selle, en distribuant le poids du corps humain uniformément sur la selle et en évitant donc tout écrasement, même après de nombreuses heures d'entraînement ou de course de compétition : le corps suit également latéralement la géométrie des muscles des jambes, évitant donc le frottement des muscles droits internes des cuisses et des muscles adducteurs qui pourrait provoquer des perturbations gênantes pour les membres inférieurs.

6. Selle selon une ou plusieurs des revendications précédentes, **caractérisée en ce que** le canal central (20) permet au sang vasculaire de s'écouler vers les structures du périnée à protéger ; le corps et, par conséquent, le rembourrage de la selle également, sont fermement fixes à la fourche particulière (13) si bien que les tubérosités ischiatiques et les branches ischio-pubiennes reposent de manière stable.

7. Selle selon une ou plusieurs des revendications précédentes, **caractérisée en ce que** les parties (9, 9') descendent comme un bec d'aigle en se réunissant ensemble sous la forme d'un demi-cercle pour maintenir les parties (1, 1') de la selle réunies ensemble à l'avant, le siège de la surface de la selle se terminant aux points (8, 8') des parties (7", 7"') de sorte que les testicules d'un utilisateur et le clitoris d'une utilisatrice ne subissent pas d'écrasement.

8. Selle selon une ou plusieurs des revendications précédentes, **caractérisée en ce que** les branches ischio-pubiennes de l'ischion, qui sont logés au-dessus des parties (7", 7"'), au niveau des parties (8, 8'), supportent une grande partie du poids du corps supérieur de la personne, lorsque l'utilisateur pose les mains sur le guidon, la partie renfoncée (21) permettant au coccyx de ne pas toucher la surface de la selle, en particulier lorsque l'utilisateur roule sur des surfaces routières accidentées.

9. Selle selon une ou plusieurs des revendications précédentes, du type destiné à la course, en particulier pour des professionnels qui s'entraînent, et participent des courses de compétition, **caractérisée en ce que**, aux points (8, 8'), la partie intérieure s'ouvre, du fond vers le sommet de 30°, ce qui augmente la largeur du canal (20) au niveau de ces points d'environ 3 cm et, par suite; l'utilisateur professionnel, pendant des courses d'entraînement et de compétition, maintient presque toujours le torse vers le bas, ce qui amené l'arcade pubienne vers la surface de la selle et, par suite, le corps du pénis à ce point (8), avec l'avantage particulier que l'utilisateur est capable de trouver un logement ergonomique plus grand, évitant ainsi la compression de l'artère et de sa veine dorsale profonde.

10. Selle selon une ou plusieurs des revendications précédentes, du type destiné à la course, **caractérisée en ce qu'**elle a un corps avec les parties avant (7", 7"') inclinées vers le haut de sorte que les branches ischio-pubiennes de l'ischion descendent, grâce à la position du torse du corps humain, lorsque l'utilisateur professionnel s'assoit sur la selle.

11. Selle selon une ou plusieurs des revendications précédentes, du type destiné aux loisirs, **caractérisée en ce qu'**elle a un corps avec les parties avant (7", 7"') inclinées vers le haut, si bien que les branches ischio-pubiennes de l'ischion mottent en raison de la position droite du torse du corps de l'utilisateur, lorsque il s'assoit sur la selle.
